# EUROPEAN PATENT SPECIFICATION

(11) **EP 1 535 169 B1**
(45) Date of publication and mention of the grant of the patent: **25.01.2012**
(21) Application number: 03765224.5
(22) Date of filing: 16.07.2003
(51) Int. Cl.: G06F 13/40

(54) **IMPROVED INTER-PROCESSOR COMMUNICATION SYSTEM FOR COMMUNICATION BETWEEN PROCESSORS**
VERBESSERTE INTERPROZESSORKOMMUNIKATION ZWISCHEN PROZESSOREN
SYSTEME DE COMMUNICATION INTERPROCESSEURS AMELIORE POUR UNE COMMUNICATION ENTRE PROCESSEURS

(30) Priority: 23.07.2002 EP 02016492
(43) Date of publication of application: 01.06.2005
(73) Proprietor: ST-Ericsson SA, 1228 Genève Plan-les-Ouates (CH)
(72) Inventor: KOCH, Stefan, 52066 Aachen (DE); GELKE, Hans-Joachim, 52066 Aachen (DE); BAUER, Harald, 52066 Aachen (DE); TRITTHART, Arthur, 52066 Aachen (DE)
(74) Representative: Zapalowicz, Francis
(86) International application number: PCT/IB2003/002813
(87) International publication number: WO 2004/010308

(56) References cited:
- US-A- 5 335 326
- US-A- 5 644 729
- US-A1- 2002 055 979
- H. HELLWAGNER, W. KARL, M. LEBERECHT: "Fast communication mechanisms - COupling hardware distributed shared memory and user-level messaging""[Online] 1997, XP002314569 INSTITUT FÜR INFORMATIK DER TECHNISCHEN UNIVERSITÄT MÜNCHEN Retrieved from the Internet: URL:http://citeseer.ist.psu.edu/hellwagner 97fast.html> [retrieved on 2005-01-19]

## Description

### Field of the invention

The present invention concerns generally the communication between two or more processors. In particular, the present invention concerns the inter-processor communication between processors that are arranged on the same semiconductor die.

### Background of the invention

As the demand for more powerful computing devices increases, more and more systems are offered that comprise more than just one processor.

For the purposes of the present invention, a distinction is to be made between computer systems that comprise two or more discrete processors and systems where two or more processors are integrated on the same chip. A computer with a main central processing unit (CPU) on a mother board and an algorithmic processor on a graphics card is an example for a computer system with two discrete processors. Another example of a computer system with several discrete processors is a parallel computer where an array of processors is arranged such that an improved performance is achieved. For sake of simplicity, systems on a board with two or more discrete processors are also considered to belong to the same category.

There are systems where two or more processors are integrated on the same chip or semiconductor die. A typical example is a SmartCard (also referred to as integrated circuit card) that has a main processor and a crypto-processor on the same semiconductor die.

As small handheld devices are becoming more and more popular, the demand for powerful and flexible chips is increasing. A typical example is the cellular phone which in the beginning of its dissemination was just a telephone for voice transmission (analogue communication). Over the years additional features have been added and most of today's cellular phones are designed for voice and data services. Additional differentiators are wireless application protocol (WAP) support, short message system (SMS), and multimedia message service (MMS) functionality, just to name some of the more recent developments. All these features require more powerful processors and quite often even dual-processor or multi-processor chips.

In the future, systems handling digital video streams for example will become available. These systems also require powerful and flexible chip sets.

Other examples are integrated circuit cards, such as multi-purpose JavaCards, small handheld devices, such as palm top computers or personal digital assistants (PDAs), video and audio devices, devices for use in automotives, and so forth.

It is essential for such dual-processor or multi-processor chips that there exists a communication channel for efficient inter-processor communication. The expression "inter-processor communication" is herein used as a synonym for any communication between a first processor and/or system resources associated with this first processor and a second processor and/or system resources associated with this second processor. A shared memory (e.g., a random access memory) is an example of a system resource that usually needs to be accessible by all processors of a chip.

System resources have to be shared in an efficient manner in dual-processor or multi-processor chips where the processors operate in parallel on the same aspect of a task or on different aspects of the same task. The sharing of resources may also be necessary in applications where processors are called upon to process related data.

An example of a multi-processor system is given in the European Patent application EP 0 580 961-A1, filed on 16 April 1993. This Patent application concerns a system with multiple discrete processors and a global bus that is shared by all these processors. Enhanced processor interfaces are provided for linking the processors to the common bus. Such multi-processor systems with a global bus cannot be realized using RISC processors, due to the high bus load which would have an impact on the system's performance. The multi-processor system presented in EP 0 580 961-A1 is powerful but complicated and expensive to implement. The shown structure cannot be used in multi-processor systems on a common die.

Another system is proposed in US Patent US 4,866,597, filed on 26 April 1985. This US Patent concerns a multi-processor system where each processor has its own processor bus. Data are exchanged between these processors via first-in-first-out data buffers (FIFO) which directly interconnect the respective processor buses. It is a disadvantage of this approach that the size of the buffers increases dramatically with the amount of data to be transferred.

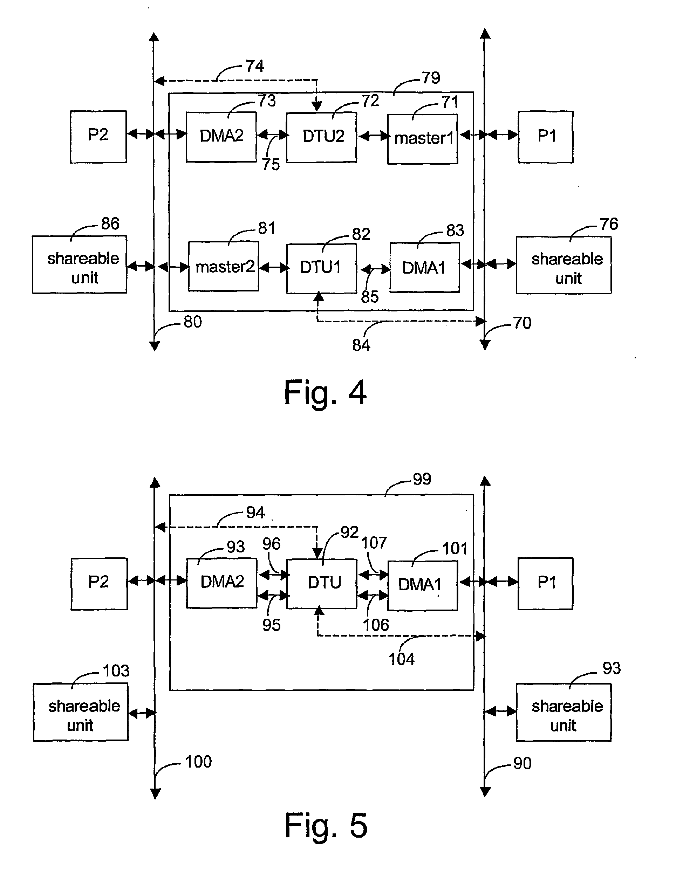

US Patent 5,093,780 concerns an inter-processor transmission system that has a data link which automatically reads and writes transfer data. A direct memory access (DMA) unit and a transmitter are assigned to a first processor and a receiver together with a DMA unit are assigned at a second processor. The processor has to set up the transfer by programming the corresponding DMA. That is, the processor has to know upfront whether data are to be transferred. This is a disadvantage of the described inter-processor transmission system, since the respective processor needs to be involved. Another disadvantage of the said system is the fact that the whole transmission is mono-directional, i.e." the implementation is asymmetric. It is just possible to transfer data from the memory 16 on the left hand side of Figure 4 to the memory 26 on the right hand side.

A DMA controller for a multi-microcomputer system is disclosed in US patent 5,222,227. The DMA controller has the function of controlling data transfer operations that are executed by the microcomputer systems. Separate address and data pipelines are provided. TriState-Technology is used for the buses. The buses CDB and SDB are at least temporarily electrically interconnected. As a consequence, both buses have to be operated at the same clock speed and both buses have to have the same bus width. According to the US patent 5,222,227, only homogeneous buses can be interconnected. There is no external DMA channel used in the system presented.

A multi-processor system with a shared memory is described and claimed in US Patent US 5,283,903, filed on 17 September 1991. The system in accordance with this US Patent comprises a plurality of processors, a shared memory (main memory), and a priority selector unit. The priority selector unit arbitrates between those processors the request access to the shared memory. This is necessary, since the shared memory is a single-port memory (e.g., a random access memory) that cannot handle simultaneous and competing requests from several processors. It is a disadvantage of this approach that the shared memory is expensive as only intermediate storage. The shared memory can get large with high data transfer.

Another multi-processor system is described in US Patent US 5,289,588, filed on 24 April 1990. The processors are coupled by a common bus. They can access a shared memory via this common bus. A cache is associated with each processor and an arbitration scheme is employed to control the access to the shared memory. It is a disadvantage of this approach that the cache memory is expensive as only big caches give a real performance boost. In addition, bus conflicts lead to a reduced performance of each processor.

A microprocessor architecture is described in the PCT Patent application PCT/JP92/00869, filed on 7 July 1992, and published under PCT Publication number WO 93/01553. The architecture supports multiple heterogeneous processors which are coupled by data, address, and control signal buses. Access to a memory is controlled by arbitration circuits.

Some of the known multi-processor systems use architectures where the inter-processor communication occupies part of the processor's processing cycles. It is desirable to avoid this overhead and to free-up the processor's processing power in order to be able to better exploit the processor's capabilities and performance.

Other known schemes cannot be used for integrated multi-processor systems where two or more processors are located within the same chip.

It is yet another disadvantage of some known systems that they are asymmetric in their implementation which means that different implementations are required for each processor. Furthermore, the effort for formal verification is greater for asymmetric than for symmetric implementations.

A The US patent publication US 2002/0055979 discloses a system comprising at least two integrated processors. These two processors are operably connected via a communication channel for exchanging information. One processor has a processor bus, a shareable unit, and a DMA unit with an external DMA channel. The DMA unit and the shareable unit are connected to the processor bus. The other processor has an access unit which is connectable to the external DMA channel of the DMA unit. Due to this arrangement, a communication channel can be established from the access unit to the shareable unit via the external DMA channel, the DMA unit, and the processor bus.

### Summary of the Invention

It is an object of the present invention to provide a scheme for efficient data transfer between two or more processors and/or their associated components.

It is an object of the present invention to provide an inter-processor data transfer scheme that is suited for the integration into a semiconductor die.

These and other objective are achieved by the present invention which provides a system as defined in independent claim 1. Further embodiments of the invention are specified in the appended dependent claims.

The communication channel can be used advantageously for communication between two or more processors and/or their associated components. The inventive arrangement suits general multi-core communication needs. The arrangement is highly symmetrical and it allows to minimise the number of otherwise needed bus masters for each processor. The present scheme is expandable and very flexible.

These and other aspects of the invention will be apparent from and elucidated with reference to the embodiment(s) described hereinafter.

### Brief description of the drawings

For a more complete description of the present invention and for further objects and advantages thereof, reference is made to the following description, taken in conjunction with the accompanying drawings, in which:
**FIG. 1** is a schematic block diagram of a dual-processor computer system, according to a first embodiment of the present invention.
**FIG. 2** is a schematic illustration of an inter-processor communication system according to the present invention.
**FIG. 3** is a detailed block diagram of the inter-processor communication system of Figure 2.
**FIG. 4** is a schematic block diagram of a dual-processor computer system not falling under the terms of claim 1;
**FIG. 5** is a schematic block diagram of a dual-processor computer system, according to another embodiment of the present invention.
**FIG. 6** is a detailed block diagram of the DTU unit of Figure 5.

### DESCRIPTION OF PREFERRED EMBODIMENTS

The present invention is described in connection with several embodiments.

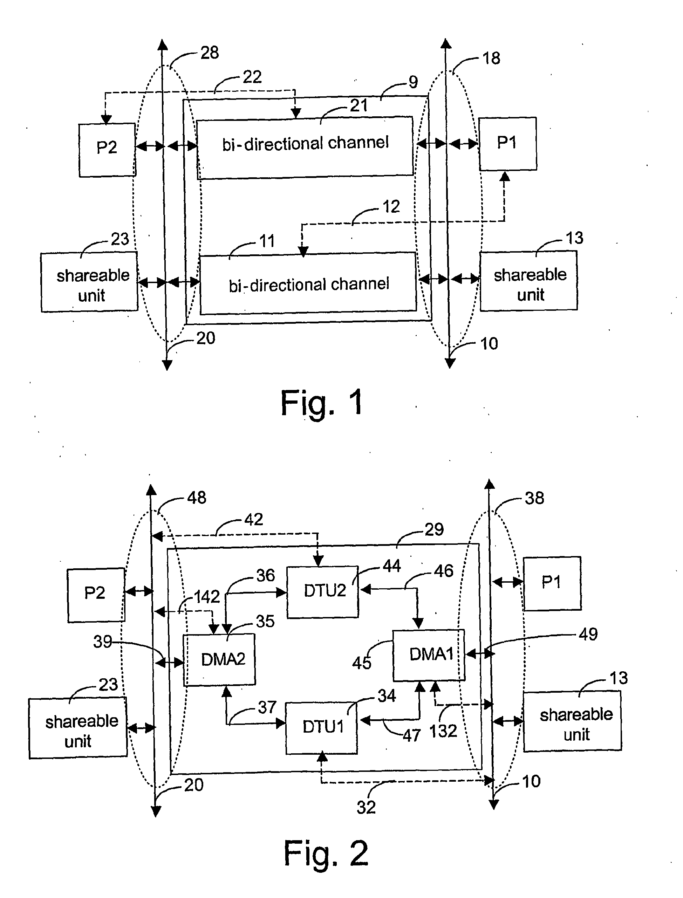

As shown in Figure 1, a dual-processor system to which the present invention is applied comprises a first processor P1 that is connected via a first processor bus 10 to a first shareable unit 13. A processor bus (also called microprocessor bus) is the main path connecting to the computer system's processor. An example of a shareable unit 13 or 23 is a shared memory (e.g., a random access memory; RAM). The first processor bus 10 is a 64 bit, 20MHz bus. The system comprises a second processor P2 that also has a processor bus 20. This second processor bus 20 is a 64 bit, 66MHz bus. An interconnection between the two processor environments 18 and 28 (schematically illustrated by ovals in Figure 1) is established via two bi-directional communication channels 11 and 21. The first bi-directional channel 11 is programmable by the processor P1, as indicated by the arrow 12, and the second channel 21 is programmable by the processor P2, as indicated by the arrow 22. The two bi-directional channels 11 and 21 are hereinafter referred to as intercore communication system 9.

More details of the first embodiment are depicted in Figure 2. The intercore communication system 29 comprises a first DMA unit 45 (DMA1) with a first and a second external DMA channel 46, 47. The first DMA unit 45 is connectable to the first processor bus 10 via an internal DMA channel 49. It furthermore comprises a first double tandem unit (DTU) 34 (DTU1) which is connectable via the first external DMA channel 47 to the first DMA unit 45. The DTU unit 34 is programmable by the first processor P1, as indicated by the arrow 32, and the first DMA unit 45 is programmable by the first processor P1, as indicated by the arrow 132 In addition, the intercore communication system 29 comprises a second DMA unit 35 (DMA2) and a second DTU unit 44 (DTU2). The DMA unit 35 has a first and a second external DMA channel 36, 37, and an internal DMA channel 39. The second DMA unit 35 is connected via the internal DMA channel 39 to the second processor bus 20. The second DMA unit 35 and the second DTU unit 44 are connectable via the first external DMA channel 37. The DTU unit 44 is programmable by the second processor P2, as indicated by the arrow 42, and the second DMA unit 35 is programmable by the second processor P2, as indicated by the arrow 142 A first bi-directional communication channel is implemented by the first DTU 34 and a second bi-directional channel is implemented by the second DTU 44. Each DTU 34, 44 is directly connectable to the processor for programming/configuration purposes, as illustrated in Figure 2. An interconnection between the two processor environments 38 and 48 (schematically illustrated by ovals in Figure 2) is established by a bi-directional data transfer.

It is a novel feature of the embodiment given in Figures 1 and 2 that the programming of one DTU unit, e.g. DTU1, allows (bi-directional) data transfer from the processor environment 48 to the processor environment 38 and vice versa without the programming of any other resource. Data can be moved to the DMA1 and fetched from the shareable unit 23 that is attached to the second processor bus 20. The DTU2 is able to move data to the DMA2 and to fetch data from the shareable unit 13 that is attached to the first processor bus 10.

The dual-processor arrangement illustrated in Figures 1 or 2 allows the second processor P2 to access the shareable unit 13. The shareable unit 23 is accessible by the processor P1.

In more general terms, one processor (processor P2 in the present embodiment) of a multi-processor system in accordance with the present invention is able to access resources (the shareable unit 13 in the present embodiment) that are associated with another processor (processor P1 in the present embodiment). A resource of another processor on a remote bus may be accessed for data up and download from cheap remote memory, for instance. A processor may for example access the memory of a co-processor to fetch data that were computed by the co-processor. These are just two typical examples of situations where a first processor accesses resources on a remote bus.

Various types of processors can be interconnected using the present scheme. It allows to realise chips with multiple homogeneous processors or even with multiple heterogeneous processors. The word processor is herein used as a synonym for any processing unit that can be integrated into a semiconductor chip and that actually executes instructions and works with data.

Complex instruction set computing (CISC) is one of the two main types of processor designs in use today. It is slowly losing popularity to reduced instruction set computing (RISC) designs. The most popular current CISC processor is the x86, but there are also 68xx, 65xx, and Z80s in use.

Currently, the fastest processors are RISC-based. There are several popular RISC processors, including Alphas (developed by Digital and currently produced by Digital/Compaq and Samsung), ARMs (developed by Advanced RISC Machines, currently owned by Intel, and currently produced by both the above and Digital/Compaq), PA-RISCs (developed by Hewlett-Packard), PowerPCs (developed in a collaborative effort between IBM, Apple, and Motorola), and SPARCs (developed by Sun; the SPARC design is currently produced by many different companies).

ARMs are different from most other processors in that they were not designed to maximise performance but rather to maximise performance per power consumed. Thus ARMs find most of their use on hand-held machines and PDAs.

In the above sections some examples of the processors were given that can be interconnected in accordance with the present invention. Also suited are Digital Signal processors (DSPs), the processor cores of any of the known processors, and customer specific processor designs. In other words, the present concept is applicable to most microprocessor architectures. One can even interconnect a processor with a slow processor bus and a processor with a fast processor bus.

For the purpose of the present application, the following is also considered to be a processor: central processing unit (CPU), microprocessor, digital signal processor (DSP), system controller (SC), co-processor, auxiliary processor, control unit and so forth.

A direct memory access (DMA) unit is a unit that is designed for passing data from a memory to another device without passing it through the processor. A DMA typically has one or more dedicated internal DMA channels and one or more dedicated external DMA channels for external peripherals. Such an external DMA channel - contrary to an internal DMA channel that is controlled by the processor to which it is associated - is set-up by external agents in order for the remote processor to get access to another processor's shareable unit. For instance, a DMA allows devices on a processor bus to access memory without requiring intervention by the processor.

Examples of shareable units are: volatile memory, non-volatile memory, peripherals, interfaces, input devices, output devices, and so forth.

The intercore communication system, according to the present invention, decouples the data flow between the clock domain of a first processor P1 and the clock domain of a second processor P2. This means that within the limits of the inventive data transfer system, the activity on one processor does not require simultaneous and equivalent activity on the other processor.

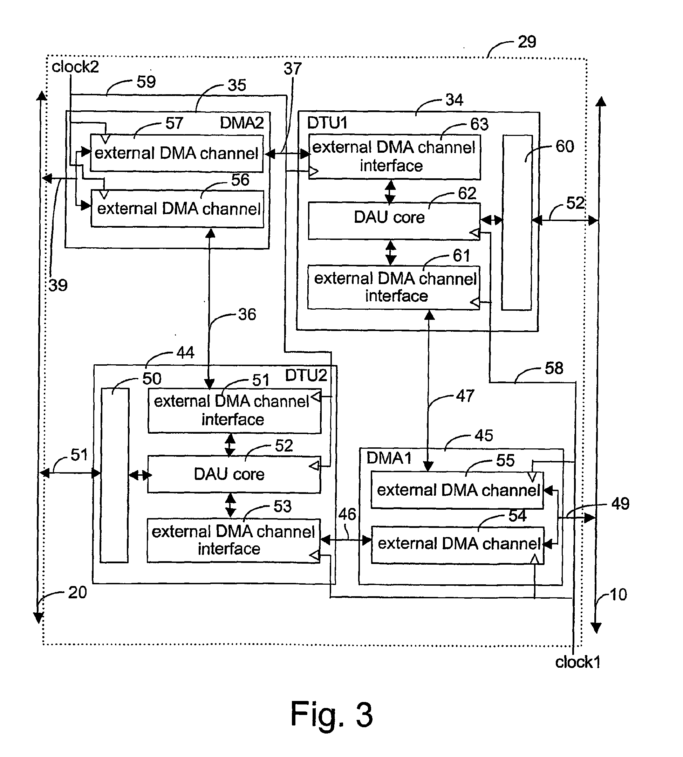

Details of the intercore communication system 29, according to the present invention, are described in connection with Figure 3. The intercore communication system 29 comprises a first DTU 34 (DTU1), a second DTU 44, (DTU2), a first DMA 45 (DMA1), and a second DMA 35 (DMA2). In the present embodiment, the DMA unit 35 comprises two external DMA channel units 56, 57. The internal channel 39 of these two external DMA channel units 56, 57 is connected to the processor bus 20.

The first external DMA channel unit 56 is connected via a link 36 to the second DTU 44. The second external DMA channel unit 57 is connected via a link 37 to the first DTU 34. The first DMA unit 45 comprises two external DMA channel units 54, 55. The internal channel 49 of these two external DMA channel units 54, 55 is connected to the processor bus 10. The first external DMA channel unit 55 is connected via a link 47 to the first DTU 34. The second external DMA channel unit 54 is connected via a link 46 to the second DTU 44. The internal channel 49 of these two external DMA channel units 54, 55 is connected to the processor bus 10.

The DTU 34 comprises a first processor interface 60 allowing a programming link 52 to be established via the processor bus 10 to the processor P1 (not shown in Figure 3). The DTU 34 further comprises a direct access unit core (DAU core) 62, and two external DMA channel interfaces 61 and 63. The external DMA channel interface 61 serves as interface to the external DMA channel unit 55 and the external DMA channel interface 63 serves as interface to the external DMA channel unit 57.

The DTU 44 comprises a first processor interface 50 allowing a programming link 51 to be established via the processor bus 20 to the processor P2 (not shown in Figure 3). The DTU 44 further comprises a direct access unit core (DAU core) 52, and two external DMA channel interfaces 51 and 53. The external DMA channel interface 51 serves as interface to the external DMA channel unit 56 and the external DMA channel interface 53 serves as interface to the external DMA channel unit 54.

The clock signal of the first processor P1 (clock1) is fed via a clock line 58 to the following units: external DMA channel unit 54, external DMA channel unit 55, external DMA channel interface 53, external DMA channel interface 61, and DAU core 62. The clock signal of the second processor P2 (clock2) is fed via a clock line 59 to the following units: external DMA channel unit 56, external DMA channel unit 57, external DMA channel interface 51, external DMA channel interface 63, and DAU core 52.

The processor P1 configures the first DTU 34 by means of the first processor interface 60. The DAU core 62 of the DTU 34 is the control logic for the two external channel interface units 61 and 63. The DAU core 62 furthermore performs the data transfers ideally enhanced by a first-in first-out (FIFO). The same way the processor P2 configures the second DTU 44 via the second processor interface 50. In both cases the external channels of the first DMA unit 45 use the resources of the internal DMA channel 49 on the processor bus 10, and the external channels of the second DMA unit 35 use the resources of the internal DMA channel 39 on the processor bus 20.

As illustrated in Figure 3, the intercore communication system 29 provides for a clock decoupling. All the blocks are either clocked by the clock1 of the processor P1 or by the clock2 of the processor P2 such that the activity on one processor does not require simultaneous and equivalent activity on the other processor.

In cases where there is no phase and/or frequency relationship between the signals clock1 and clock2, the DAU cores 52, 62 can be implemented such that they are enabled to provide safe data transfers by means of appropriate handshaking signals. These handshaking signals are active between the DAU core 52 and the external DMA channel interface 53 as well as

between the DAU core 62 and the external DMA channel interface 63.

The external DMA channel interfaces and/or the DAU cores can be standardised. In other words, each DTU or DMA, according to the present invention, may contain an identical functional core. Only the processor interface has to be adapted depending on the actual processor and/or processor bus employed. This leads to a reduced development time due to maximising of re-use and reduced verification effort.

According to the present invention, a DMA unit is connected via its internal interface to a processor bus and via its external interface to a DTU. The external interface may be 8 bits wide.

The processor interface has a programming input (e.g. input 52 in Figure 3), since this interface serves for the programming of the DTU in which it is comprised. The processor interface does not require any data link to the processor bus, since any data exchanged is handled by the DTU's external DMA channel interfaces. The setup and configuration of the bi-directional channel is done by a processor by programming via the processor interface the respective DTU's DAU core.

The DTU 34, for instance makes use of the external DMA channel 47 in order to transfer information (data and/or control information) to and from the shareable unit 13.

In Figure 4 a system is illustrated that comprises a first processor P1, a first processor bus 70, and a first shareable unit 76 being connected to the first processor bus 70. There is a second processor P2, a second processor bus 80 and a second shareable unit 86 attached thereto. A first bi-directional communication channel is establishable via a first DMA unit 83 with an external DMA channel 85. The first DMA unit 83 is connectable to the first processor bus 70. A first DTU unit 82 is provided. The first DTU unit 82 is connectable via the external DMA channel 85 to the first DMA unit 83. The DTU unit 82 is programmable by the first processor P1. The programming takes place via the processor bus 70 and a programming link 84. Furthermore, a master unit (master2) 81 is provided. This master unit 81 serves as an interface between the first DTU 82 and the second processor bus 80. A second bi-directional communication channel is establishable via a second DMA unit 73 with an external DMA channel 75. The second DMA unit 73 is connectable to the second processor bus 80. A second DTU unit 72 is provided. The second DTU unit 72 is connectable via the external DMA channel 75 to the second DMA unit 73. The DTU unit 72 is programmable by the second processor P2. The programming takes place via the processor bus 80 and a programming link 74. Furthermore, a master unit (master1) 71 is provided. This master unit 71 serves as an interface between the second DTU 72 and the first processor bus 70. A master in the present context is a unit being able to initiate (and continue) data transfers on the processor buses. The masters therefore need to have access to some kind of arbitration (prioritization) on the buses (this prioritization is not part of the present patent application). The masters have an addressing circuitry used to select the active device on the processor bus.

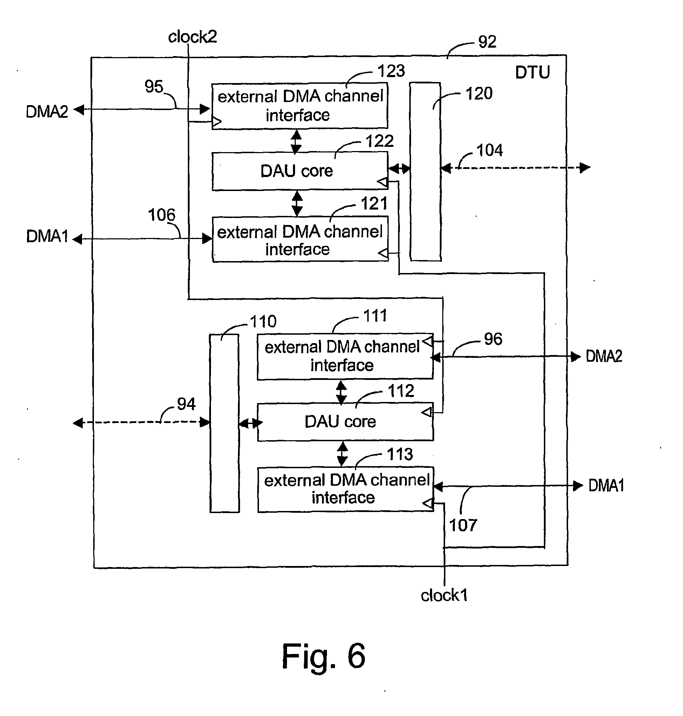

Another embodiment is illustrated in Figure 5. An intercore communication system 99 is provided that allows to establish two bi-directional channels between the two processor busses 90 and 100. The processor P1 may be a digital signal processor (DSP) core, and the processor P2 may be a system controller (SC) core, for example. In the present embodiment, there is one common DTU unit 92 which for example comprises the functional elements of the DTU1 and DTU2 of Figures 2, 3, or 4. One part of this common DTU 92 is programmable by the processor P1, as indicated by the arrow 104, and the other part is programmable by the processor P2, as indicated by the arrow 94. Details of this DTU 92 are depicted in Figure 6.

The common DTU 92 comprises a first processor interface 120 allowing a programming link 104 to be established via the processor bus 90 to the processor P1 (not shown in Figure 6). The DTU 92 further comprises a direct access unit core (DAU core) 122, and two external DMA channel interfaces 121 and 123. The external DMA channel interface 121 serves as interface to the DMA1 unit 101 and the external DMA channel interface 123 serves as interface to the DMA2 unit 93. The DTU 92 further comprises a second processor interface 110 allowing a programming link 94 to be established via the processor bus 100 to the processor P2 (not shown in Figure 6). The DTU 92 further comprises another direct access unit core (DAU core) 112, and two external DMA channel interfaces 111 and 113. The external DMA channel interface 111 serves as interface to the DMA2 unit 93 and the external DMA channel interface 113 serves as interface to the DMA1 unit 101. How the two clock signals clock1 and clock2 are applied is also shown in Figure 6.

The DTU 92 programming is preferably done using two separate register sets, each register set being assigned by one processor. P1 or P2. This allows to avoid conflicts with simultaneous accesses performed by the two DAU cores 112 and 122. However, a prioritisation scheme is required that allows to prioritise requests from the processor P1 or requests from the processor P2. The following two schemes are proposed:
- No priority is specified and the operation is based on the first come first serve principle, i.e., the processor that comes fist has the priority over the other processor. Ongoing transfers are always completed and new transfers are put on a waiting queue..
- The processor P1 has priority over the processor P2, or vice versa. An ongoing transfer of low priority data can be interrupted by a request submitted by the processor that has the higher priority. The interrupt of the transfer happens transparent to the low priority core. After the high priority request has finished, the low priority request is resumed. A high priority transfer is never interrupted.

According to the present invention, the DTU units make use of external DMA channels to transfer data to/from the shareable unit that is connectable to the processor bus of the other processor. Such an external DMA channel, contrary to the internal DMA channels which are programmed by the respective processor, are set-up by external agents in order to get access to the resources of the other processor. The external agents in this patent application are the commands programmed by a remote processor to have access to a resource on the local processor - the internal DMA channels are programmed by the local processor itself.

The present invention can also be employed in systems with more than two processors. A third processor might be connected via its own processor bus, a third DMA3 unit and a third DTU3 to the DMA2 unit of the second processor, for example. This would allow the third processor to establish a bi-directional channel to resources that are associated with the second processor.

In yet another embodiment of the invention, two or more processors and a communication channel for inter-processor communication in accordance with the present invention, are integrated into a custom application specific integrated circuit (ASIC).

It is an advantage of the architecture presented and claimed herein that it supports multiple heterogeneous processors. The inventive scheme can be expanded to suit general multi-core communication needs. Due to the present invention, the number of bus masters for each processor can be reduced, as potentially available DMA units can be used for this purpose. The concept and design reuse is another advantage. Different other advantages have been mentioned in connection with the various embodiments of the present invention.

The proposed architecture is symmetric and applicable to most microprocessor architectures. It can be expanded to multi-core architectures, i.e., it is independent of the number of cores.

The present invention is well suited for use in computing devices, such as PDAs, handheld computers, palm top computers, and so forth. It is also suited for being used in cellular phones (e.g., GSM phones), cordless phones (e.g., DECT phones), and so forth. The architecture proposed herein can be used in chips or chip sets for the above devices or chips for Blue tooth applications.

It is appreciated that various features of the invention which are, for clarity, described in the context of separate embodiments may also be provided in combination in a single embodiment. Conversely, various features of the invention which are, for brevity, described in the context of a single embodiment may also be provided separately or in any suitable sub combination.

In the drawings and specification there has been set forth preferred embodiments of the invention and, although specific terms are used, the description thus given uses terminology in a generic and descriptive sense only and not for purposes of limitation.

## Claims

1. System comprising
- a first processor bus (10),
- a first processor (P1) being connected to the first processor bus (10),
- a first shareable unit (13) being connected to the first processor bus (10),
- a second processor bus (20),
- a second processor (P2) being connected to the second processor bus (20),
- a second shareable unit (23) being connected to the second processor bus (20),
- a first Direct Memory Access unit (45) with a first external Direct Memory Access channel (55), a second external Direct Memory Access channel (54) and an internal Direct Memory Access channel (49), the first Direct Memory Access unit (45) being connected to the first processor bus (10) via said internal Direct Memory Access channel (49) of said first Direct Memory Access unit (45)
- a second Direct Memory Access unit (35) with a first external Direct Memory Access channel (56), a second external Direct Memory Access channel (57) and an internal Direct Memory Access channel (39), said second Direct Memory Access unit (35) being connected to the second processor bus (20) via said internal Direct Memory Access channel (39) of said second Direct Memory Access unit (35),
- a first programmable unit (34) comprising a processor interface (60), two external Direct Memory Access channel interfaces (61, 63), a Direct Access Unit core (62) controlling said two external Direct Memory Access channel interfaces (61, 63) of said first programmable unit (34), said first programmable unit being connected via one (61) of its two external Direct Memory Access channel interfaces (61, 63) to said first external Direct Memory Access channel (55) of said first Direct Memory Access unit (45), the other one (63) of its two external Direct Memory Access channel interfaces (61, 63) being connected to the second external Direct Memory Access channel (57) of said second external Direct Memory Access unit (35), said first programmable unit (34) being programmed by the first processor (P1),
- a second programmable unit (44) comprising a processor interface (50), two external Direct Memory Access channel interface (51, 53), a Direct Access Unit core (52) controlling the two external Direct Memory Access channel interfaces (51, 53) of said second programmable unit (44), said second programmable unit being connected via one (51) of its two external Direct Memory Access channel interfaces (51, 53) to said first external Direct Memory Access channel (56) of said second Direct Memory Access unit (35), the other one of its two external Direct Memory Access channel interfaces (51, 53) being connected to the second external Direct Memory Access channel (54) of said first external Direct Memory Access unit (45), said second programmable unit (44) being programmed by the second processor (P2), and
wherein a first bi-directional communication channel, implemented by the first programmable unit, is established between the first shareable unit (13) and the second processor (P2), and a second bi-directional communication channel, implemented by the second programmable unit, is established between the second shareable unit (23) and the first processor (P1),
- wherein the first and second processors (P1, P2) are configured to respectively program, via their respective processor interfaces (50, 60), the Direct Access Unit core (52, 62, 112, 122) of the first and second programmable units for doing the setup and configuration of the first and second bi-directional channels via said internal Direct Memory Access channels and external Direct Memory Access channels of said Direct Memory Access units and said external Direct Memory Access channel interfaces of said first and second programmable units.

2. The system of claim 1, wherein the first bi-directional communication channel and/or the second bi-directional communication channel are half-duplex channels or full-duplex channels.

3. The system of claim 1, wherein the processor (P1) and the processor (P2) are similar from an architectural point of view.

4. The system of claim 1, wherein the processor (P1) and the processor (P2) are implementations of the same type of processor design.

5. The system of claim 1, wherein the processor (P1) and the processor (P2) are implementations of different types of processor design.

6. The system of the claims 1-5, wherein the shareable unit (13; 76; 93; 23; 86; 103) is either of the following: a memory, a peripheral, an interface, an input device, an output device.

7. The system of the claims 1-5, wherein one of the two integrated processors (P1,P2) is a central processing unit (CPU), a microprocessor, a digital signal processor (DSP), a system controller (SC), a co-processor, or an auxiliary processor.

8. The systems of claim 1, wherein the processor interface (50 ; 60; 110; 120) has a programming link (12,22 ; 32,42 ; 51,52 ; 74,84 ; 94,104) either for connecting to a processor bus (10,20 ; 70,80 ; 90,100) or for connecting to a processor (P1, P2).

9. The system of any of the preceding claims, wherein the communication channel are establishable for transferring data and/or control information to and from the shareable unit (13; 76; 93; 23; 86; 103).

10. A computing device comprising a system as claimed in any one of claims 1 to 10, said first processor (P1) and said second processor (P2) being arranged on a common semiconductor die and being operably connected via said first and second bi- directional communication channels for exchanging information.

## Patentansprüche

1. System, umfassend
- einen ersten Prozessorbus (10),
- einen ersten Prozessor (P1), der mit dem ersten Prozessorbus (10) verbunden ist,
- eine erste gemeinsam nutzbare Einheit (13), die mit dem ersten Prozessorbus (10) verbunden ist,
- einen zweiten Prozessorbus (20),
- einen zweiten Prozessor (P2), der mit dem zweiten Prozessorbus (20) verbunden ist,
- eine zweite gemeinsam nutzbare Einheit (23), die mit dem zweiten Prozessorbus (20) verbunden ist,
- eine erste Speicherdirektzugriff-Einheit (45) mit einem ersten externen Speicherdirektzugriff-Kanal (55), einem zweiten externen Speicherdirektzugriff-Kanal (54) und einem internen Speicherdirektzugriff-Kanal (49), wobei die erste Speicherdirektzugriff-Einheit (45) über den internen Speicherdirektzugriff-Kanal (49) der ersten Speicherdirektzugriff-Einheit (45) mit dem ersten Prozessorbus (10) verbunden ist,
- eine zweite Speicherdirektzugriff-Einheit (35) mit einem ersten externen Speicherdirektzugriff-Kanal (56), einem zweiten externen Speicherdirektzugriff-Kanal (57) und einem internen Speicherdirektzugriff-Kanal (39), wobei die zweite Speicherdirektzugriff-Einheit (35) über den internen Speicherdirektzugriff-Kanal (39) der zweiten Speicherdirektzugriff-Einheit (35) mit dem zweiten Prozessorbus (20) verbunden ist,
- eine erste programmierbare Einheit (34), umfassend eine Prozessorschnittstelle (60), zwei externe Speicherdirektzugriff-Kanal-Schnittstellen (61, 63), einen Direktzugriffseinheit-Kern (62), der die zwei externen Speicherdirektzugriff-Kanal-Schnittstellen (61, 63) der ersten programmierbaren Einheit (34) steuert, wobei die erste programmierbare Einheit über eine (61) ihrer zwei externen Speicherdirektzugriff-Kanal-Schnittstellen (61, 63) mit dem ersten externen Speicherdirektzugriff-Kanal (55) der ersten Speicherdirektzugriff-Einheit (45) verbunden ist, wobei die andere (63) ihrer zwei externen Speicherdirektzugriff-Kanal-Schnittstellen (61, 63) mit dem zweiten externen Speicherdirektzugriff-Kanal (57) der zweiten externen Speicherdirektzugriff-Einheit (35) verbunden ist, wobei die erste programmierbare Einheit (34) von dem ersten Prozessor (P1) programmiert wird,
- eine zweite programmierbare Einheit (44), umfassend eine Prozessorschnittstelle (50), zwei externe Speicherdirektzugriff-Kanal-Schnittstellen (51, 53), einen Direktzugriffseinheit-Kern (52), der die zwei externen Speicherdirektzugriff-Kanal-Schnittstellen (51, 53) der zweiten programmierbaren Einheit (44) steuert, wobei die zweite programmierbare Einheit über eine (51) ihrer zwei externen Speicherdirektzugriff-Kanal-Schnittstellen (51, 53) mit dem ersten externen Speicherdirektzugriff-Kanal (56) der zweiten Speicherdirektzugriff-Einheit (35) verbunden ist, wobei die andere ihrer zwei externen Speicherdirektzugriff-Kanal-Schnittstellen (51, 53) mit dem zweiten externen Speicherdirektzugriff-Kanal (54) der ersten externen Speicherdirektzugriff-Einheit (45) verbunden ist, wobei die zweite programmierbare Einheit (44) von dem zweiten Prozessor (P2) programmiert wird, und
wobei ein von der ersten programmierbaren Einheit implementierter erster bidirektionaler Kommunikationskanal zwischen der ersten gemeinsam nutzbaren Einheit (13) und dem zweiten Prozessor (P2) eingerichtet wird und ein von der zweiten programmierbaren Einheit implementierter zweiter bidirektionaler Kommunikationskanal zwischen der zweiten gemeinsam nutzbaren Einheit (23) und dem ersten Prozessor (P1) eingerichtet wird,
- wobei der erste und zweite Prozessor (P1, P2) konfiguriert sind, über ihre jeweiligen Prozessorschnittstellen (50, 60), den Direktzugriffseinheit-Kern (52, 62, 112, 122) der ersten und zweiten programmierbaren Einheit zum Durchführen der Einrichtung und Konfiguration des ersten und zweiten bidirektionalen Kanals über die internen Speicherdirektzugriff-Kanäle und externen Speicherdirektzugriff-Kanäle der Speicherdirektzugriff-Einheiten und die externen Speicherdirektzugriff-Kanal-Schnittstellen der ersten und zweiten programmierbaren Einheit jeweils zu programmieren.

2. System nach Anspruch 1, wobei der erste bidirektionale Kommunikationskanal und/oder der zweite bidirektionale Kommunikationskanal Halbduplex-Kanäle oder Vollduplex-Kanäle sind.

3. System nach Anspruch 1, wobei der Prozessor (P1) und der Prozessor (P2) von einem architektonischen Standpunkt ähnlich sind.

4. System nach Anspruch 1, wobei der Prozessor (P1) und der Prozessor (P2) Implementierungen desselben Prozessorkonstruktionstyps sind.

5. System nach Anspruch 1, wobei der Prozessor (P1) und der Prozessor (P2) Implementierungen von verschiedenen Prozessorkonstruktionstypen sind.

6. System nach den Ansprüchen 1-5, wobei die gemeinsam nutzbare Einheit (13; 76; 93; 23; 86; 103) eines der Folgenden ist: ein Speicher, eine Peripherieeinrichtung, eine Schnittstelle, eine Eingabevorrichtung, eine Ausgabevorrichtung.

7. System nach den Ansprüchen 1-5, wobei einer der zwei integrierten Prozessoren (P1, P2) eine Zentralverarbeitungseinheit (CPU), ein Mikroprozessor, ein Digitalsignalprozessor (DSP), eine Systemsteuerung (SC), ein Koprozessor oder ein Hilfsprozessor ist.

8. System nach Anspruch 1, wobei die Prozessorschnittstelle (50; 60; 110; 120) eine Programmierungsverknüpfung (12, 22; 32, 42; 51, 52; 74, 84; 94, 104) entweder zur Verbindung mit einem Prozessorbus (10, 20; 70, 80; 90, 100) oder zur Verbindung mit einem Prozessor (P1, P2) aufweist.

9. System nach einem der vorstehenden Ansprüche, wobei die Kommunikationskanäle zum Übertragen von Daten und/oder Steuerungsinformationen zu und von der gemeinsam nutzbaren Einheit (13; 76; 93; 23; 86; 103) einrichtbar sind.

10. Rechenvorrichtung, umfassend ein System nach einem der Ansprüche 1 bis 10, wobei der erste Prozessor (P1) und der zweite Prozessor (P2) auf einem gemeinsamen Halbleiterchip angeordnet sind und über den ersten und zweiten bidirektionalen Kommunikationskanal zum Austauschen von Informationen betriebsfähig verbunden sind.

## Revendications

1. Système comprenant :
- un premier bus de processeur (10),
- un premier processeur (P1) connecté au premier bus de processeur (10),
- une première unité partageable (13) connectée au premier bus de processeur (10),
- un deuxième bus de processeur (20),
- un deuxième processeur (P2) connecté au deuxième bus de processeur (20),
- une deuxième unité partageable (23) connectée au deuxième bus de processeur (20),
- une première unité d'accès direct à la mémoire (45) avec un premier canal externe d'accès direct à la mémoire (55), un deuxième canal externe d'accès direct à la mémoire (54) et un canal interne d'accès direct à la mémoire (49), la première unité d'accès direct à la mémoire (45) étant connectée au premier bus de processeur (10) via ledit canal interne d'accès direct à la mémoire (49) de ladite première unité d'accès direct à la mémoire (45),
- une deuxième unité d'accès direct à la mémoire (35) avec un premier canal externe d'accès direct à la mémoire (56), un deuxième canal externe d'accès direct à la mémoire (57) et un canal interne d'accès direct à la mémoire (39), ladite deuxième unité d'accès direct à la mémoire (35) étant connectée au deuxième bus de processeur (20) via ledit canal interne d'accès direct à la mémoire (39) de ladite deuxième unité d'accès direct à la mémoire (35),
- une première unité programmable (34) comprenant une interface de processeur (60), deux interfaces de canaux externes d'accès direct à la mémoire (61, 63), un coeur d'unité d'accès direct (62) commandant lesdites deux interfaces de canaux externes d'accès direct à la mémoire (61, 63) de ladite première unité programmable (34), ladite première unité programmable étant connectée par l'intermédiaire de l'une (61) de ses deux interfaces de canaux externes d'accès direct à la mémoire (61, 63) audit premier canal externe d'accès direct à la mémoire (55) de ladite première unité d'accès direct à la mémoire (45), l'autre (63) de ses deux interfaces de canaux externes d'accès direct à la mémoire (61, 63) étant connectée au deuxième canal externe d'accès direct à la mémoire (57) de ladite deuxième unité d'accès direct à la mémoire (35), ladite première unité programmable (34) étant programmée par le premier processeur (P1),
- une deuxième unité programmable (44) comprenant une interface de processeur (50), deux interfaces de canaux externes d'accès direct à la mémoire (51, 53), un coeur d'unité d'accès direct (52) commandant les deux interfaces de canaux externes d'accès direct à la mémoire (51, 53) de ladite deuxième unité programmable (44), ladite deuxième unité programmable étant connectée par l'intermédiaire de l'une (51) de ses deux interfaces de canaux externes d'accès direct à la mémoire (51, 53) audit premier canal externe d'accès direct à la mémoire (56) de ladite deuxième unité d'accès direct à la mémoire (35), l'autre de ses deux interfaces de canaux externes d'accès direct à la mémoire (51, 53) étant connectée au deuxième canal externe d'accès direct à la mémoire (54) de ladite première unité d'accès direct à la mémoire (45), ladite deuxième unité programmable (44) étant programmée par le deuxième processeur (P2), et
dans lequel un premier canal de communication bidirectionnel, mis en oeuvre par la première unité programmable, est établi entre la première unité partageable (13) et le deuxième processeur (P2), et un deuxième canal de communication bidirectionnel, mis en oeuvre par la deuxième unité programmable, est établi entre la deuxième unité partageable (23) et le premier processeur (P1),
dans lequel les premier et deuxième processeurs (P1, P2) sont configurés pour programmer respectivement, via leurs interfaces de processeur respectives (50, 60), le coeur d'unité d'accès direct (52, 62, 112, 122) des première et deuxième unités programmables pour réaliser le réglage et la configuration des premier et deuxième canaux bidirectionnels par l'intermédiaire desdits canaux internes d'accès direct à la mémoire et desdits canaux externes d'accès direct à la mémoire desdites unités d'accès direct à la mémoire et desdites interfaces de canaux externes d'accès direct à la mémoire desdites première et deuxième unités programmables.

2. Système selon la revendication 1, dans lequel le premier canal de communication bidirectionnel et/ou le deuxième canal de communication bidirectionnel sont des canaux semi-duplex ou des canaux en duplex intégral.

3. Système selon la revendication 1, dans lequel le processeur (P1) et le processeur (P2) sont similaires du point de vue architectural.

4. Système selon la revendication 1, dans lequel le processeur (P1) et le processeur (P2) sont des mises en oeuvre du même type de conception de processeur.

5. Système selon la revendication 1, dans lequel le processeur (P1) et le processeur (P2) sont des mises en oeuvre de types de conception de processeur différents.

6. Système selon les revendications 1 à 5, dans lequel l'unité partageable (13 ; 76 ; 93 ; 23 ; 86 ; 103) est l'un quelconque des éléments suivants : une mémoire, un périphérique, une interface, un dispositif d'entrée, un dispositif de sortie.

7. Système selon les revendications 1 à 5, dans lequel l'un des deux processeurs intégrés (P1, P2) est une unité centrale de traitement (CPU), un microprocesseur, un processeur de signaux numériques (DSP), un contrôleur de système (SC), un coprocesseur ou un processeur auxiliaire.

8. Système selon la revendication 1, dans lequel l'interface de processeur (50 ; 60 ; 110 ; 120) a une liaison de programmation (12, 22 ; 32, 42 ; 51, 52 ; 74, 84 ; 94, 104) destinée à être connectée soit à un bus de processeur (10, 20 ; 70, 80 ; 90, 100), soit à un processeur (P1, P2).

9. Système selon l'une quelconque des revendications précédentes, dans lequel les canaux de communication peuvent être établis pour transférer des données et/ou des informations de commande vers et depuis l'unité partageable (13 ; 76 ; 93 ; 23 ; 86 ; 103).

10. Dispositif informatique comprenant un système selon l'une quelconque des revendications 1 à 10, ledit premier processeur (P1) et ledit deuxième processeur (P2) étant agencés sur une puce à semiconducteur commune et étant connectés fonctionnellement par l'intermédiaire desdits premier et deuxième canaux de communication bidirectionnels pour échanger des informations.
